# EUROPEAN PATENT APPLICATION

(11) **EP 1 113 643 A2**
(43) Date of publication of application: **04.07.2001**
(21) Application number: 00311603.5
(22) Date of filing: 21.12.2000
(51) Int. Cl.: H04L 29/06, G06F 17/30

(54) **Method and apparatus for accessing dynamic information network objets**

(30) Priority: 30.12.1999 US 476441
(71) Applicant: AT&T Corp., New York, NY 10013-2412 (US)
(72) Inventor: Begeja, Lee, Gillette, NJ 07933 (US); Demarco, Ralph Richard, Jr., New Providence, NJ 07974 (US); Jacobson, Guy, Bridgewater, NJ 08807 (US); Nguyen, Du T., New York, NY 10025 (US); Renger, Bernard S.L., New Providence, NJ 07974 (US)
(74) Representative: Suckling, Andrew Michael

(57) **Abstract**

A method and apparatus for providing dynamic information object access via a network. The dynamic information object, or note, can be a World Wide Web object that is accessed by a plurality of users via the Internet. Users can modify the content of the note in a simple fashion, e.g., by using a set of commands or through a graphical user interface. The note can have multimodal access capability so that users can access the note using any one of a plurality of different types of communication devices. Thus, groups of users can use a note to communicate with each other in a way similar to the way groups of people use a bulletin board to communicate with each other, and yet have ready access to the note virtually regardless of physical location and/or communication device used.

## Description

### BACKGROUND OF THE INVENTION

### 1. Field of Invention

This invention relates to accessing dynamic information objects via a network.

### 2. Description of Related Art

Typical network information objects, such as World Wide Web pages; can be viewed and interacted with by a wide variety of people using communication devices, such as programmed general purpose computers. However, individuals that access World Wide Web pages, bulletin board services, etc., cannot typically change the content or format of the page. In addition, information objects, such as World Wide Web pages, must be viewed using a particular method or application, such as a general purpose computer with an Internet browsing application.

### SUMMARY OF THE INVENTION

The invention provides a method and apparatus for accessing dynamic information sources via a network. The dynamic information sources, or notes, are software, hardware or software/hardware objects in a network that can be accessed by multiple different users through the network to access the contents of the note. As used herein, the term "access" includes the ability to modify information in and/or receive information from a note, and the term "content" includes data and/or processing or operating instructions for the note.

As one example, a note could be posted on an Internet World Wide Web server so that the note can only be accessed by a specific group of individuals, such as the members of a particular family. Authorized users of the note can access the note to add, delete or otherwise modify existing note content, e.g., change the way the note operates or information stored in the note. Thus, a note can be used similarly to the way groups of people use a bulletin board to communicate. For example, a note could be used to maintain a holiday gift list or shopping list for a family. Family members could access the note to determine the items that are currently on the list, add, delete or otherwise modify items on the list, e.g., delete items if the items have been bought. Authorized users can also change the way the note operates, either to customize the note operation to a particular user's preference or to make a more universal change to the note. For example, a user could change the note to display listed items in alphabetical order or in the order in which the items were added or modified on the list. Such an operation change could be made so that when only a particular user accesses the note the note contents are displayed in a desired way, or the change can be made so that when all users access the note the change in operation affects all users. For example, a person may be prevented from accessing information indicating that items in a gift list for that person have been already purchased.

A note's operation can also be modified so that particular users are not provided with all information contained in the note. In the shopping list example, younger members of the user family may be denied access to particular groups of gift list or shopping list items, such as birthday gifts. In addition, a note can be configured to itself gather information from various sources, rather than only having the capability to receive information from authorized users. For example, a note could be configured to search an information database or other source and post the information in the note. In the shopping list example, users could simply add items to a list, and the note could search information sources, such as World Wide Web pages, other notes, other notes associated with particular groups of people, etc., for retail outlets and approximate retail prices for each item or other information. The note could then post the approximate retail price and at least one retail outlet where each shopping list item could be purchased.

In one aspect of the invention, notes have a multimodal access capability so that a note can be accessed using various different kinds of communication devices, including programmed general purpose computers, various different kinds of software applications, cellular telephones, personal digital assistants (PDAs), cable television sets, interactive television (ITV), etc. Thus, authorized human users of a note can access a note using a wide variety of different kinds of communication devices. The note, or another device in the network, determines the type of communication device being used to access a note, and the note or other device adjusts the format of information sent between the note and the communication device based on the type of communication device. As used herein, the term "format" can include content, such as information content, how content is displayed on a communication device, how content is sent between a note and a communication device, etc. In the shopping list example described above, an authorized user using a cellular telephone could access the note on the Internet World Wide Web server, e.g., by dialing a specific telephone number that is recognized by the cellular network as an access number to the note. The note, or other device in the communications network that sends information between the note and the cellular telephone, determines that the note is being accessed by a cellular telephone and the format of information sent between the note and the telephone is adjusted accordingly. For example, the shopping list contained in the note could be processed to generate a computer-read, audio playback of the shopping list contents so that the user could listen on the telephone to the list. The user could also add, delete or otherwise modify the note content, e.g., by punching particular DTMF codes or a sequence of codes, by voice recognition techniques, etc. The same shopping list note could be accessed by another user by programmed general purpose computer through an Internet connection, by another user using a cable television set, ITV, etc. Thus, the multimodal access feature of a note can allow ready access to a note virtually regardless of the type of communication device used to access the note.

In another aspect of the invention, members of a group of authorized users can be allowed different levels of access to the note and/or be restricted in the ways that note content can be used or disseminated to third parties. In the gift or shopping list example, a third party could be allowed to access the list note to search for particular items on the list and take some potentially limited action based on the results of the search. For example, the third party could determine that a particular item is listed and either update the note content to provide information regarding the price, availability or source of the item, or otherwise use the information for commercial purposes. For example, the third party could send an e-mail message to one or more authorized users of the note indicating that a particular listed item is available from a particular retail outlet at a particular price.
The third party could also compile information that it gathers from multiple notes in a network and use that information for commercial purposes. For example, the third party could determine that 10 out of 20 notes in a network include reference to a particular item and use that information to adjust production rates of the item, item prices or other commercial aspects related to the item. As one example, if a total of 1,000 notes make reference to product A and distributors of product A in a relevant market area only have 200 product As in stock, the distributors could take action to move additional product A to the particular geographical area. The third party could also take steps to contact authorized users of the 1,000 notes and offer a reduced price for product A if the users elect to purchase the item within a desired time period.

These and other aspects of the invention will be apparent and/or obvious from the following description.

### BRIEF DESCRIPTION OF THE DRAWINGS

The invention is described in detail with regard to the following figures wherein like numerals reference like elements, and wherein:
Fig. 1 is a schematic block diagram of a communication system including a note in accordance with the invention;
Fig. 2 is a more detailed schematic block diagram of a communication system including a note;
Fig. 3 is a schematic block diagram of one example of a note; and
Fig. 4 is a flowchart of steps of a method for providing a note function in accordance with the invention.

### DETAILED DESCRIPTION OF PREFERRED EMBODIMENTS

Some aspects of the invention are described below in connection with a telecommunication system. That is, users access a note by using a communication device in connection with a telecommunications system. However, it will be appreciated that the invention can be used with other types of communication systems, including wired and wireless communication systems, computer or other similar networks such as the Internet, cable networks, cellular networks, etc.

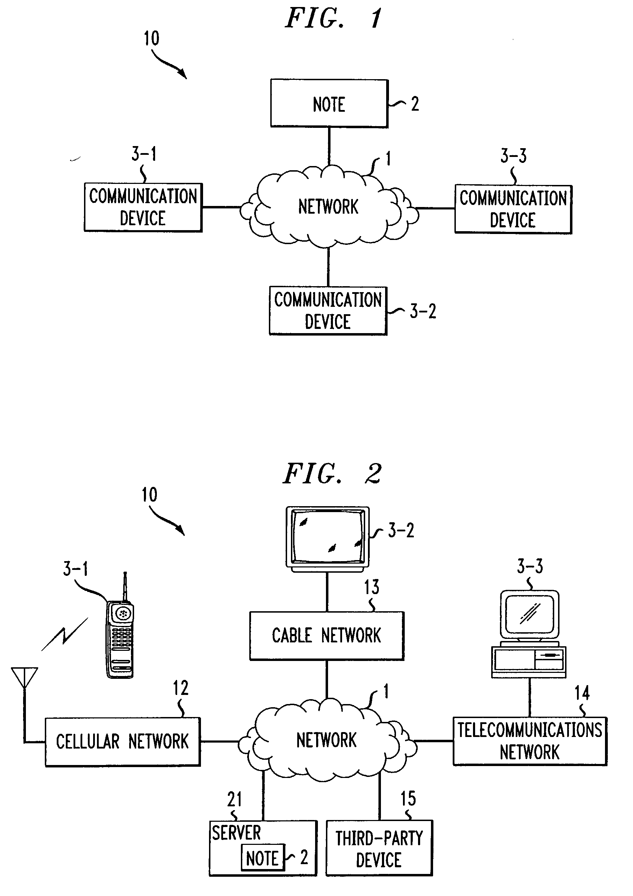

Fig. 1 is a schematic block diagram of a communication system 10 configured in accordance with the invention. The communication system 10 includes a network 1 that transmits information between the communication devices 3 and a note 2. The network 1 in this example is a telecommunications network, but can be or include any number of different types of networks, including wired and wireless communication networks, data networks, computer networks, cable networks, etc.

The note 2 in this example is a network object that can receive information from and send information to the communication devices 3 in addition to performing desired data processing functions. Thus, the note 2 can be a software object (a list of computer program instructions) that operates on a server or other data processing apparatus that is part of the network 1 or communicates with the network 1. The note 2 can also be implemented, at least in part, as a single special purpose integrated circuit (e.g., ASIC) or an array of ASICs each having a main or central processor section for overall, system-level control, and separate sections dedicated to performing various specific computations, functions and other processes under the control of the central processor section. The note 2 can also be implemented using a plurality of separate dedicated programmable integrated or other electronic circuits or devices, e.g., hard-wired electronic or logic circuits, such as discrete element circuits or programmable logic devices. The note 2 can also include other devices, such as volatile or non-volatile memory devices, communication devices and/or other circuitry or components necessary to perform the desired input/output or other functions. The note 2 can also include an interface, such as a user interface including a keyboard, monitor, user pointing device, etc.

The communication devices 3 in this example are programmed general purpose computers, but can be or include other devices, such as wired and wireless telephones, facsimile machines, modems, video conferencing devices, cable television sets, etc. In short, any communications device used for one- or two-way communication services can be used.

As one example, a user of the communication device 3-1 could use the network 1 to access the note 2, or establish the note 2 and its operating parameters. For example, the user of the communication device 3-1 could establish the note 2 to provide a shopping list function and configure the note 2 so that only users A, B and C can access the note 2.

Thus, authorized user B using the communication device 3-2 could access the note 2 through the network 1 and add, delete or otherwise modify items in the list in the note 2. The user B can also modify the operation of the note 2 so that the note 2 contents are presented in a particular manner, so that the note 2 gathers information from other sources, such as Internet web sites, and supplements the content of the note 2, etc.

The note 2 can also have multimodal access capabilities so that different kinds of communication devices 3 can access the note 2. For example, user A can use a programmed personal computer as communication device 3-1, user B can use a cellular telephone as communication device 3-2, and user C can use a cable television set top box as the communication device 3-3 to access the note 2. An advantage of the note 2 is that access can easily be had regardless of the type of communication device 3 used. Thus, the network 1, portions of the network 1 and/or the note 2 can determine the type of communication device 3 being used to access the note 2 and make appropriate adjustments to the format of the information provided to the communication device 3, how a note 2's content is displayed by a communication device 3, etc.

Fig. 2 shows a more detailed schematic block diagram of another example of a communication system 10 using a note 2. In this example, the note 2 operates on a server 21, which can be a programmed general purpose computer or other data processing apparatus. The server 21 communicates with the Internet 11 or other similar communication network. Other networks, such as a cellular network 12, a cable network 13 and a telecommunications network 14 also communicate with the Internet 11 and/or are part of the communications infrastructure that supports the communications made in the Internet 11. Users can access the note 2 by using one of the communication devices 3, where in this example the communication device 3-1 is a cellular telephone, the communication device 3-2 is a cable television and communication device 3-3 is a general purpose computer. In addition, a third-party device 15 can also access the note 2. The third party device 15 can be a programmed general purpose computer that automatically accesses notes 2 to gather desired information that is later used, e.g., for commercial purposes. Clearly, in this example, the note 2 has a multimodal access capability and can be accessed by any one of the communication devices 3-1 through 3-3 and/or the third party device 15. However, such capability is not required and the note 2 could be configured so that only a single type or relatively small group of types of communication devices 3 can be used to access the note 2.

As one example, the note 2 could be used to perform a gift list function so that authorized users can access the note 2 and modify the contents of the note 2 as discussed above. For example, an authorized user could access the note 2 using the communication device 3-2 through the cable network 13 and add one or more gift items to be purchased for the user or other people. For example, the user could send a signal to the cable network 13 indicating a desire to access the note 2, e.g., by accessing a particular cable television channel on a cable set top box. The signal could also be or include, for example, an Internet web page-type address or e-mail-type address that is used by communication devices in the cable network 13 to access the note 2 through the Internet 11. Thus, the communication device 3-2 could access the note 2 through an intermediate interface, such as a computer server, in the cable network 13, or the communication device 3-2, if properly equipped, could communicate directly with the note 2.

The signal sent by the user to the note 2 can represent any type of desired information, including instructions for modifying the note 2's content or operation. For example, the note 2 could be configured at the request of the user using the communication device 3-2 to search information sources via the Internet 11 for a particular type of information, e.g., prices for gift items listed in the note that have not yet been purchased, and post the information on the note 2. The note 2 can also be configured to gather information by sending information requests to other authorized users, e.g., send a message requesting whether a particular gift item has been purchased to a user of the cellular telephone 3-1. Upon receiving the desired information, the note 2 can also process the information in any way in preparation for providing and/or displaying the information to authorized users. Messages from a user to modify the note 2's content can have a simple form, thereby not requiring users to learn a complex programming code. For example, a user could send a message "list product A" to the note 2 to list the product A on the note 2. A message such as "post product prices" could configure the note 2 to search for, retrieve and post product prices.

As one example, a user may want to know when a group of people or a particular person is present in a particular room, e.g., when a child has returned home from school. The user could configure a note 2 to be linked to a video camera that provides a video signal of the room to the note 2. The note 2 could process the video signal to gather information from the signal, e.g., process the video signal to determine whether two or more people are in a room, whether a particular person is in a room, etc. The note 2 could then notify the user, such as by sending a pager message or email message, that a group of people or a particular person is present in the room.

One advantage of the note 2 is that the note 2 is universally and easily accessed by various authorized users using any one of different types communication devices 3, if the note has multimodal access functionality. If the note 2 does not have multimodal access capability, the note 2 still has the advantage of easy access by users. Thus, contrary to standard World Wide Web pages, a note 2's content can be easily changed by users and users can configure the note 2 to gather, process and display additional information.
Thus, in the gift list example, several different authorized users could access the note, add or delete items, indicate that items have been purchased, prevent access to particular list items to certain note users, etc. In addition, third parties using a third party device 15 or other communication device 3 could access the note to modify note content, obtain particular information, etc.

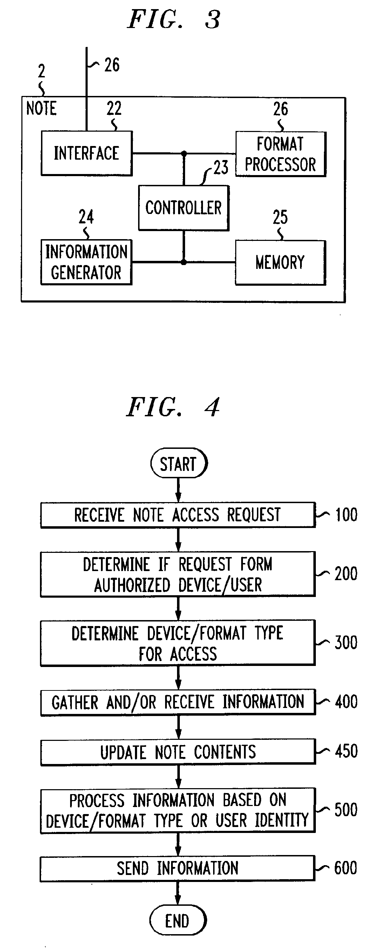

Fig. 3 shows a schematic block diagram of one example of a note 2. The note 2 includes an interface 22 that receives and sends information from sources outside the note 2 via a line 26. The controller 23 controls the operations of the note 2, which also includes an information generator 24, a memory 25 and a format processor 26. The information generator 24 can include an information database, a list of information sources, a video camera, or other device that generates or otherwise gathers information required for the note 2. The memory 25 can be a volatile or non-volatile memory device and can store various different information, including operating instructions for the note 2, authorized user identification lists, etc. The format processor 26 processes information within the note 2 so that information received or sent out by the note 2 is in a proper format. As discussed above, information format can relate to the content of the information, how the information is to be displayed on a communication device 3, a type of communication protocol to be used when communicating with a communication device 3, etc.

As discussed above, the note 2 can be a software module operating on a general purpose data processing apparatus, an ASIC or array of ASICs, a set of hardwired electronic circuitry and components, etc. Similarly, the interface 22, the information generator 24 and the format processor 26 can be implemented as software modules that are executed by the controller 23 or other data processing apparatus.

As an example, a signal could be received by the interface 22 on the line 26 from a communication device 3 requesting access to the note 2. The controller 23 could compare information included in the request to information stored in the memory 25 in order to allow access to the note 2. Alternately, the controller 23 could allow access by any requester to the note 2. If the information in the request, such as a password and/or user identifier match information stored in an authorized user list in the memory 25, the controller 23 could next determine what type of request is being made. For example, if the request is to send information back to the communication device 3, the controller 23 could request the information generator 24 to generate the required information and when the information has been generated, the format processor 26 could properly format the information and send the information back to the communication device 3. An access request can also include instructions for modifying information in a note 2. For example, a list of shopping items stored in the memory 25 could be added to, deleted or otherwise modified as desired. The request could also change operating characteristics of the note 2, e.g., so that the format processor 26 provides information to a particular communication device 3 in a particular format. The request instructions can have a simple form that is recognized by the note 2. For example, the access request can include the instruction "list item D" or "use format M for communication device F" or "post published articles by author G", etc.

The note 2 can also send a list of content modifying commands to the communication device 3 so that the user can select the command, e.g., by voice command, pointing device, graphical user interface, etc., rather than require the user to remember commands. Thus, the note 2 can operate in a way similar to a computer word processing application to allow users to modify note 2 content.

Fig. 4 is a flowchart of steps of a method for providing access to an information object via a network. In step 100, a note access request is received. The note access request can include various different types of information, including a user identifier, password, note content change instructions, note operating change instructions, etc. As one example, a note can be a software or software/hardware object operating on or in conjunction with an Internet server. A request could be received over a communications network, such as the Internet, a telecommunications network, a cable network, computer network, etc. The request can originate from the any type of communications device, such as a wireless telephone, general purpose computer, cable television, PDA, etc.

In step 200, a determination is made if the request is from an authorized device and/or user. Although this step is not necessary, access to the note can be restricted to particular devices and/or users. That is, a note can be initially configured so that only a limited number of human users can access the note using any type of communication device, or that only certain devices can access the note. In addition, authorization for a particular device, such as a third party device, and/or user can be determined based on the type or content of information requested. For example, a particular third party device may be authorized to access a particular note, but not necessarily all of the note content. The determination in step 200 can be made based on information such as a device or user identifier, password, type of information request, a type of access request, etc.

Although step 200 is shown as following step 100 and preceding step 300, an authorization determination can be made at other points of the flowchart of Fig. 4. For example, an authorization determination can be made after step 300, after step 400 or at any other point, as desired. For example, after requested information is gathered in step 400 described below, a determination can be made whether the requesting device/user is authorized to access the information.

In step 300, a determination is made, if necessary, for a format type for the requested note access. For example, if a wireless telephone is being used to access the note, one type of format that insures that information sent to the wireless telephone can be displayed, i.e., audibly or visually reproduced, by the telephone. Similarly, if the communication device being used to access the note is a personal computer, another type of format that allows more extensive video display, for example, can be used.

In step 400, appropriate operations are taken to gather and/or receive information. For example, the access request could include operating instructions for the note to gather information from a particular known or unknown information source, such as an Internet web site, remote computer database, a particular human user, a video camera, other notes, other notes associated with individuals in a certain group, historical use of notes by certain individuals, etc.

In step 450, the appropriate information, once gathered, can be used to update the note contents, i.e., gathered information can be processed in any desired fashion and stored in a memory associated with the note. This step can include the note sending a list of commands, information for a graphical user interface or other interface information to the communication device so that the user can easily send content modifying commands to the note.

In step 500, information content in the note is processed based on the determined format or user identity, and in step 600, the processed information is sent from the note. As discussed above, the processing performed in step 500 can include various different kinds of processing, including sending information in a particular format, removing or adding information or withholding information based on a particular user or device's identity, etc.

As will be appreciated, a note according to the invention is very flexible and can be used in many different ways in addition to those discussed above. For example, notes can be programmed or otherwise configured to perform specific information functions, if desired. For example, a video processing note could be constructed that is dedicated to processing one or more received video signals, extracting desired information from the video signals, such as a particular individual's identity, and posting the extracted information in the note. The note could also take steps to automatically notify users, such as by sending a signal to the authorized users' communication devices.

Notes can also be used by a communication service provider that maintains a communication network not only for the convenience of users of the network, but also for additional commercial purposes. For example, the network service provider could allow users to freely create and use notes as desired, but also access the contents of the notes of many different users or groups of users (with the knowledge of the users) to obtain information for commercial use. For example, the network service provider could search all notes in the network for any reference to a particular product or service and use that information commercially. If, for example, reference was made in a sufficient number of notes about a particular product or service, the network service provider could notify third party vendors that several users may be considering purchasing the product or service. The network service provider could also notify the third party vendors of the identity of particular users that make reference to the product or service in a note. Alternately, the third party vendors could be allowed access to the notes directly through a third party device, e.g., the third party device 15 shown in Fig. 2.

Notes could also be used by third party vendors to gather customer or other product information. For example, a note could be posted by a vendor that relates to a particular product or service. Other customers or consumer users could access the note, alter the contents of the note, provide additional information or comment and otherwise use the note as desired. However, the vendor could configure the note so that individual customers or other consumer users could only access particular sets of information, such as information listed by the particular user, rather than have access to all information in the note.

Thus, the advantage of the note is that it is easily accessed, changed and modified by various different users without any particular programming knowledge. That is, a note could be modified or otherwise updated in a way similar to the way word processing, voice mail or e-mail applications are currently used to change, gather and store information.

While this invention has been described in conjunction with specific embodiments thereof, it is evident that many alternatives, modifications and variations will be apparent to those skilled in the art. Accordingly, preferred embodiments of this invention as set forth herein are intended to be illustrative, not limiting. Various changes may be made without departing from the spirit and scope of the invention.

## Claims

1. A method for providing access to a note via a network, comprising:
receiving a note access request over the network;
updating note content in accordance with the access request;
processing note content information based on the note access request; and
outputting the processed note information.

2. The method of claim 1, further comprising:
determining a format type for the access request.

3. The method of claim 1, wherein the network includes the Internet and the note is a World Wide Web object that can be accessed by a group of users.

4. The method of claim 3, wherein the step of receiving a note access request comprises receiving a request from one of a plurality of different types of communication devices.

5. The method of claim 1, wherein the step of receiving a note access request comprises receiving a request from one of a plurality of different types of communication devices.

6. The method of claim 1, wherein the note has a multimodal access capability.

7. The method of claim 1, wherein the note is accessible by a plurality of users having an unrestricted ability to modify the note content.

8. The method of claim 1, wherein the step of receiving a note access request comprises receiving a plurality of note access requests from a plurality of different users, and the step of updating note contents comprises modifying the note content in accordance with all of the note access requests.

9. The method of claim 1, wherein the step of updating note content comprises modifying text information in a database.

10. The method of claim 1, wherein the step of processing note content comprises modifying content information based on one of a user identity and a communication device type.

11. The method of claim 1, wherein the step of processing note content comprises automatically gathering information from sources other than authorized users of the note and posting the gathered information in the note.

12. The method of claim 11, wherein the sources include at least one of other notes, other notes corresponding to users associated with a particular group, and a historical use of a note by a particular individual user.

13. The method of claim 1, further comprising receiving an access request from a third party wishing to access the note content for commercial purposes.

14. The method of claim 1, further comprising determining the extent to which a user or device that originated the note access request is authorized to access the note content.

15. A note in communication with a network, the note comprising:
an interface that communicates with at least one communication device via the network;
an information generator that generates information content for the note;
a format processor that processes information so that information sent by the interface is in a proper format;
a memory that stores note content; and
a controller that controls the operation of the interface, the information generator, the format processor and the memory;
wherein a plurality of different users can access the note content via the network.

16. The note of claim 15, wherein the network includes the Internet and the note is a World Wide Web object that can be accessed by the plurality of different users.

17. The note of claim 16, wherein the plurality of different users can access the note using a plurality of different types of communication devices.

18. The note of claim 15, wherein the plurality of different users can access the note using a plurality of different types of communication devices.

19. The note of claim 15, wherein the note has a multimodal access capability.

20. The note of claim 15, wherein the plurality of users each have an unrestricted ability to modify the note content.

21. The note of claim 15, wherein the information generator modifies text information stored in the memory in accordance with content modification instructions received from the users.

22. The note of claim 15, wherein the format processor modifies note content information based on one of a user identity and a communication device type used to access the note.

23. The note of claim 15, wherein the information generator automatically gathers information from sources other than authorized users of the note and stores the gathered information in the memory.

24. The note of claim 15, wherein the interface receives an access request from a third party wishing to access the note content for commercial purposes.
